(19) Europäisches Patentamt
European Patent Office
Office européen des brevets

(11) **EP 4 654 069 A1**

(12) **EUROPEAN PATENT APPLICATION**

(43) Date of publication:
26.11.2025 Bulletin 2025/48

(21) Application number: 24177143.5

(22) Date of filing: 21.05.2024

(51) International Patent Classification (IPC):
$G06F\ 30/23^{(2020.01)}$     $G06F\ 30/28^{(2020.01)}$
$F28F\ 7/02^{(2006.01)}$     $G06F\ 119/08^{(2020.01)}$
$G06F\ 119/18^{(2020.01)}$

(52) Cooperative Patent Classification (CPC):
F28F 7/02; G06F 30/23; G06F 30/28;
F28F 2200/00; G06F 2119/08; G06F 2119/18

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicants:
• VITO NV
2400 Mol (BE)

• Buckinx, Geert
3000 Leuven (BE)

(72) Inventor: BUCKINX, Geert
3000 Leuven (BE)

(74) Representative: V.O.
P.O. Box 87930
2508 DH Den Haag (NL)

(54) **A METHOD AND SYSTEM FOR OPTIMIZING THERMAL ENERGY TRANSFER DEVICES**

(57)     A method and system for optimizing the geometric configuration of a thermal energy transfer device featuring vertically stacked thermal energy channels separated by a wall structure. The device is conceptualized as composed of $N1 \times N2 \times N3$ identical unit cells, each encompassing parts of the channels. Optimization is conducted at the unit cell level, focusing on the geometry of solid structures within the channels to enhance thermal energy transfer between the involved fluid streams/flows within each of the at least two channels. This is achieved through shape optimization using a processing unit, which iteratively adjusts the boundaries of these structures based on predefined criteria until a specific performance threshold is met or a maximum number of iterations is reached. The outcome is optimized design parameters that define the geometry of the solid structures in each unit cell. These parameters are then utilized to guide the manufacturing of the optimized thermal energy transfer device.

FIG 4

EP 4 654 069 A1

**Description**

FIELD OF THE INVENTION

The invention relates to a computer-implemented method for optimizing geometric configurations of a thermal energy transfer device as a physical object. The invention also relates to a system for optimizing geometric configurations of a thermal energy transfer device as a physical object. Furthermore, the invention relates to a method for constructing a thermal energy transfer device. Additionally, the invention relates to a thermal energy transfer device.

BACKGROUND TO THE INVENTION

Thermal energy transfer devices are fundamental to numerous industrial applications, including heating, cooling, and energy conversion systems. These devices, such as heat exchangers, play a critical role in enhancing the efficiency and operational effectiveness of such systems. However, the design and optimization of these devices are confronted with significant challenges that impact their performance, cost-effectiveness, and adaptability to different applications.
The conventional approach often involves extensive computational resources and time, primarily because of the complexity of simulating and optimizing the entire system's thermal dynamics. Such comprehensive simulations require high computational power and sophisticated software, which not only increase the cost of the design process but also extend the development time. Moreover, these systems are typically designed for a specific set of performance parameters and operating conditions, limiting their flexibility and scalability to different applications or changing requirements. Often, however, the devices are designed based on heuristic design rules (hence the result of trial and error), so that in many cases the design is not even well-tuned towards its actual application or the system to be integrated in.
Traditional thermal energy transfer devices often feature designs that are difficult to scale or modify. Adapting a design to different sizes or operational capacities frequently necessitates a complete redesign of the system, consuming additional resources and time. Such inflexibility hampers the ability of manufacturers to quickly respond to market needs or technological advancements.
Therefore, the traditional design and optimization practices for thermal energy transfer devices face substantial hurdles in terms of computational demands, flexibility, scalability, and material constraints. These challenges necessitate significant time, technical expertise, and financial investment, hindering innovation and efficiency in the development of new and improved thermal energy transfer solutions.
In addition to the design and optimization challenges, the manufacturing of thermal energy transfer devices introduces its own set of problems that complicate the production process. The scalability of production itself is another critical challenge. Traditional methods often do not allow for easy adjustments or modifications to the production process to cater to different sizes and configurations of thermal energy transfer devices.
These challenges underline the need for improved approaches to the design, optimization, and manufacturing of these devices.

SUMMARY OF THE INVENTION

It is an object of the invention to provide for a method and a system that obviates at least one of the above mentioned drawbacks.
Additionally or alternatively, it is an object of the invention to provide for an improved method and system for optimizing geometric configurations of a thermal energy transfer device as a physical object.
Additionally or alternatively, it is an object of the invention to provide for an enhanced method for constructing a thermal energy transfer device.
Additionally or alternatively, it is an object of the invention to provide for an efficient design system for improved manufacturing of thermal energy transfer devices.
Additionally or alternatively, it is an object of the invention to provide for an adaptive framework for the modular construction of thermal energy transfer devices.
Additionally or alternatively, it is an object of the invention to provide for a cost-effective approach to reducing production time and resource use in thermal energy transfer devices.
Thereto, the invention provides for a computer-implemented method for optimizing geometric configurations of a thermal energy transfer device as a physical object, the thermal energy transfer device having at least a first thermal energy transfer channel and a second thermal energy transfer channel in a vertically stacked arrangement relative to one another, and wherein a wall structure is positioned between the channels to maintain separation therebetween, and wherein, within each channel, a plurality of solid structures are arranged in a periodic configuration (e.g. repetitive arrangement/pattern) for facilitating transfer of thermal energy from one fluid to another; wherein the method including the steps of: obtaining target design criteria of the physical object; defining, based on the target design criteria of the physical object, a unit cell which is dimensioned such that the thermal energy transfer device is formed by N1 × N2 × N3 identical unit cells, each unit cell forming a repeatable segment of at least the first thermal energy transfer channel and the second thermal energy transfer channel, with a wall portion of the wall structure arranged between said channels; performing, by means of a processing unit, a shape optimization of at least one or more solid structures within at least the first and second thermal energy transfer channels of the thermal energy transfer device at the unit cell level, wherein the geometric design of solid structures of a single unit cell is optimized based on a set of criteria, wherein the shape optimization involves iterative modification of the boundary surfaces of the one or more solid structures in the repeatable segment of at least the first thermal energy transfer channel and the second thermal energy transfer channel defined by the single unit cell, and wherein the shape optimization of the single unit cell is performed until a stop criterion is met, the stop criterion being defined as achieving a predetermined threshold of performance or reaching a maximum number of optimization iterations; outputting optimized design parameters representing at least geometric configuration of solid structures in each unit cell of the thermal energy transfer device; and transferring data based on the outputted optimized design parameters to production equipment to manufacture an optimized physical object representing at least a part of the thermal energy transfer device with N1 × N2 × N3 identical unit cells.

Advantageously, a reduction of complexity and computational resources required for optimization is obtained. This is primarily achieved by structuring the thermal energy transfer device into a matrix of N1 × N2 × N3 identical unit cells (each cell defining at least two flow channels), each embodying a repeatable segment of the device's thermal energy transfer channels, with structured solid components within these channels. By focusing optimization efforts at the unit cell level, and employing shape optimization of the solid structures within these unit cells based on a set of criteria until a predetermined performance threshold is met or a maximum number of iterations is reached, the method facilitates rapid development and iteration of designs. This structured approach allows for more efficient computation and easier scalability of the thermal energy transfer device design, leading to quicker realization of optimized physical objects with enhanced performance characteristics.

The computer-implemented method facilitates a simultaneous optimization process tailored to all involved fluid streams. Traditional methods have typically addressed the optimization of fluid flows in a sequential or isolated manner, neglecting the interdependencies and potential synergies between multiple fluid streams within the same device. The present invention, however, advantageously integrates and optimizes multiple fluid streams concurrently, ensuring that each fluid's flow characteristics are considered and enhanced in unison. This integrated approach to optimization results in a coherent, mutually beneficial arrangement of flow paths that substantially improves the overall efficiency, effectiveness, and performance of the thermal energy transfer device. By enabling simultaneous optimization, the invention provides an improved methodology that captures the complexities of multi-fluid interactions within a unified framework, thereby delivering optimized configurations that are not only technically feasible but also commercially viable and more effective in real-world applications.

Differentiation between multiple thermal energy transfer channels is important, as each channel may accommodate a distinct fluid, potentially exhibiting a unique flow direction. The optimization process considers these differences by enabling each unit cell within the thermal energy transfer device to contain multiple fluids, each with its respective primary flow direction and mass flow rate. This arrangement ensures that performance is maximized by tailoring the flow paths and thermal interactions according to the specific requirements of each fluid involved. Furthermore, the vertical stacking of unit cells contributes to the structured arrangement, where each stacked level corresponds to at least two distinct channels. This configuration facilitates a compact and efficient design, promoting superior heat transfer capabilities in each channel by aligning the fluid dynamics and thermal properties optimally within the stacked geometry of the device. The invention thereby supports a multifunctional and scalable approach to thermal management in various applications, ensuring that each unit cell and its constituent channels function equivalently when scaled across the entire device, represented by N1 × N2 × N3 identical unit cells. This systematic optimization not only enhances the design methodology but also simplifies the manufacturing process.

A systematic approach to optimizing the geometric configurations of thermal energy transfer devices is provided wherein a significant reduction in the complexity and computational resources required for the optimization process is obtained from the novel structuring of the device into a pre-defined matrix of identical unit cells, each of these unit cells representing a repeatable segment of the device's thermal energy transfer channels, incorporating structured solid components designed to facilitate the effective transfer of thermal energy.

The optimization process is concentrated at the level of these individual unit cells, with a focus on the shape optimization of the solid structures contained within them. This is conducted based on a comprehensive set of criteria, guiding the optimization until either a specific performance threshold is achieved or a predetermined maximum number of optimization iterations is reached. Such criteria may include, but are not limited to, thermal efficiency, structural integrity, hydraulic performance, structural integrity (cf. mechanical stresses) and material limitations. This granular approach to optimization is particularly advantageous as it allows for iterative modifications to be made in a controlled and manageable environment, directly targeting the enhancement of performance within each unit cell.

By reducing the optimization process to the unit cell level, the method significantly decreases the computational load, enabling quicker processing and evaluation of design modifications. This facilitates rapid development and iteration of designs. This is in strong contrast to traditional methods that may require optimization of the entire device as a single entity, which is typically computationally intensive and time-consuming, and for some designs not feasible to accurately optimize.

Moreover, the structured approach to design, based on a matrix of N1 × N2 × N3 identical unit cells, allows for more efficient computation and easier scalability of the thermal energy transfer device. This scalability can be important for adapting the device to various sizes and applications without necessitating a complete redesign of the system. The ability to replicate and scale the optimized unit cell across the device facilitates a modular design strategy, streamlining the transition from conceptual optimization to the physical realization of the device. As a result, the method not only speeds up the development cycle of thermal energy transfer devices but also enhances their performance characteristics through targeted optimization.

The computer-implemented optimization framework according to the disclosure thus provides a pathway to the quicker realization of optimized physical objects.

The performance may be a thermal performance, a hydraulic performance, a structural performance (e.g. structural integrity), etc.

As there are at least two flows, the unit cells can be stacked in a three-dimensional matrix of N1×N2×N3 unit cells. Optionally, each layer of N1×N2 unit cells is then vertically connected to another layer of N1×N2 unit cells above and below, in a vertically periodic/repetitive way.

Optionally, the method further comprises determining a predominant fluid flow direction for each of the first thermal energy transfer channel and the second thermal energy transfer channel, wherein the first thermal energy transfer channel and the second thermal energy transfer channel have respective flow directions, wherein the respective flow directions of the first and second thermal energy transfer channels may be the same or differ from each other, and wherein the optimization of the geometric configuration of the solid structures within each unit cell takes into account the flow direction within each channel.

A predominant fluid flow direction for each of the thermal energy transfer channels can be determined. This consideration of fluid flow directions, which may be the same or differ between channels, enables enhancing the geometric configuration of the solid structures within each unit cell to better accommodate the directional flow of thermal fluids. Such a tailored approach ensures that the optimization not only considers performance but also the dynamic nature of fluid flow, thereby potentially improving the efficiency and effectiveness of thermal energy transfer within the device. By taking into account the flow direction, and optionally as well as the specific mass flow rate, within each channel, the method can achieve optimized designs that are more closely aligned with the operational conditions of the thermal energy transfer device.

By determining the predominant fluid flow direction within each thermal energy transfer channel, acknowledging that these directions may either align or diverge across channels, the geometry of the solid structures can be optimized effectively to accommodate the specific flow directions. Fluids, when navigating through the channels of a thermal energy transfer device, interact with the solid structures within, and these interactions are significantly influenced by the direction of flow.

Optionally, for each of the first thermal energy transfer channel and the second thermal energy transfer channel, fluid flow is modeled using periodic flow equations, said periodic flow equations ensuring homogeneity in fluid flow characteristics across the fluid channels in each unit cell constituting the thermal energy transfer channels; and wherein heat transfer within each channel of the unit cell is modeled by periodic heat transfer equations, these equations incorporating both periodically varying components and exponentially varying components to depict the temperature field dynamics within the thermal energy transfer channels.

Such modelling approach ensures homogeneity in fluid flow characteristics and depicting temperature field dynamics across the fluid channels in each unit cell. The incorporation of both periodically and exponentially varying components within these equations allows for a more accurate representation of the thermal fluid's behavior and heat transfer processes. This modeling approach aids in achieving a uniform performance across the device, facilitating the optimization process by providing a reliable basis for iterative shape modifications within the unit cells. As a result, the method enables the creation of thermal energy transfer devices with enhanced predictability and efficiency in heat transfer.

The use of periodic flow equations is important for ensuring that fluid flow characteristics are uniform across the entire thermal energy transfer device. Incorporating exponentially varying components (and optionally linearly varying components) within the heat transfer equations allows the method to accurately model the complex temperature gradients that occur within the thermal energy transfer channels. This detailed representation of temperature field dynamics is important for understanding how heat is distributed and transferred throughout the device. By accurately modeling these dynamics, the method can guide the iterative shape modifications of solid structures within the unit cells to enhance overall performance.

The combination of periodically and exponentially varying (and optionally linearly varying) components in the modeling equations lends a high degree of predictability to the behavior of thermal fluids within the device. This predictability is important for designing thermal energy transfer devices that perform consistently under varying operational conditions. Furthermore, by providing a detailed and accurate representation of fluid flow and heat transfer processes, the method facilitates the optimization of the device's geometric configuration in a manner that significantly enhances heat transfer efficiency.

In some examples, there may also be periodically-linearly varying components in the fluid flow equations when the system encounters balanced fluid flows, where two flows possess equal thermal capacities. This inclusion may allow for a more accurate depiction of the thermal dynamics under such specific conditions.

Traditionally, a single fluid channel would typically exhibit a linear temperature gradient across each unit cell, with a periodic temperature component matching across the unit cells. However, with at least two different fluids present, temperature changes occur in more complex patterns due to the differing thermal properties and interaction dynamics of the fluids. For instance, in a counterflow configuration, one fluid might experience an exponential temperature increase while also undergoing periodic temperature changes. Conversely, when the fluids are balanced, meaning they have equivalent mass flow rates and heat capacities, the temperature increment will be linear in the direction of flow, accompanied by a periodic temperature variation. In crossflow orientations, each fluid can exhibit two exponential temperature changes in both directions, alongside a periodic temperature component and an equilibrium temperature state that also becomes relevant. This equilibrium temperature may be present for all flow directions. However, in some examples, this may be neglected, since only relative temperature difference will impact the optimized design.

These thermal behaviors are incorporated into the models used to optimize the device, reflecting the physical arrangement of vertically stacked channels. Such stacking can accommodate either identical or different fluids, with variable flow directions. If the fluids in the stacked channels share the same flow direction, the temperature profile generally shows an exponential increase or decrease, consistent across each unit cell, in addition to the already mentioned periodic temperature variation. If the flow directions are opposite, the temperature changes in opposing directions also exhibit exponential behavior, accompanied by a periodic temperature field.

In scenarios where the fluids' flow directions form a specific angle relative to each other, two exponential temperature changes occur in the direction of each fluid. This observation holds generally, indicating that regardless of the specific flow direction, exponential temperature changes occur in the direction of flow for each fluid, highlighting the sophisticated thermal management capabilities of the thermal energy transfer device. These insights underline the physical distinction and variability of channels within the stacked configuration.

In the particular instance where mass flow rates and/or heat capacities, are identical across channels, a special case arises where the temperature change within each channel is linear rather than exponential. The temperature behavior of each fluid present in the device, can be formulated as a combination of periodic temperature variations and a net exponential change along the flow direction of the fluid. Consequently, for each fluid, multiple temperature variations may occur if there are multiple flow directions. For each directional vector, a distinct exponential parameter arises, indicating varying exponential increases in different directions for each flow. Within this framework, the total temperature distribution in each fluid may be characterized by three principal parameters:

1) The equilibrium temperature, representing the constant temperature that would be attained if the channel were infinitely large.
2) The periodic component specific to each fluid and each direction, which interacts dynamically with:
3) The exponential component, where the temperature change is directional, represented by a vector. In some cases, also a linear component is present, when the fluid flows are balanced (cf. equal thermal capacities), so that the net temperature gradient is constant.

To address lateral interactions, periodicity of the unit cells can be utilized to ensure uniformity and repeatability across the device, solving any adjacency issues by leveraging the periodic nature of these cells.

The linear temperature change component, while pertinent, is typically observed in scenarios involving balanced flow conditions, where the mass flow rates and heat capacities of the fluids are equivalent. However, for a comprehensive and effective design, it is important to incorporate the exponential temperature changes for each direction and each fluid. This inclusion is important to accurately model and optimize the performance of the device under various operational conditions. Therefore, the periodic heat transfer equations account for the exponential temperature rise of each fluid in each flow direction. This covers all potential configurations and fluid interactions within the device.

Optionally, the periodic heat equations account for incremental temperature change in a thermal transfer fluid as it passes through successive unit cells along a flow path in the thermal energy transfer channels.

By focusing on the incremental temperature changes of the thermal transfer fluid as it navigates through successive unit cells, an important layer of precision to the optimization process is introduced that significantly enhances the method's utility and effectiveness.

The periodically developed heat transfer equations can be utilized to accurately model the temperature profiles. These equations can be employed to delineate the periodic temperature part alongside the exponential or linear component of the temperature field for at least two fluids. This modeling is particularly relevant when the fluids are arranged in a vertical stack forming an N1×N2×N3 matrix of unit cells. Each unit cell may be assumed to have either adiabatic surfaces or periodically coupled surfaces, ensuring that thermal interactions are accurately captured. This arrangement allows for a comprehensive simulation of heat transfer dynamics, which can be important for accurately optimizing the device's performance in industrial applications where precise temperature control and efficiency are needed.

In some examples, the energy conservation equation plays a crucial role in determining the temperature field within the unit cell. This equation accounts for the convection and conduction phenomena occurring within the fluid and solid domains, respectively. By incorporating parameters such as the fluid's density $\rho f$, specific heat capacity $cf$, and the thermal conductivity $k(x)$, which varies spatially to reflect the distribution of solid and fluid regions, the model meticulously captures the essence of heat transfer mechanisms. The energy conservation equation ensures that the sum of convective and conductive heat transfer rates equals the heat input from the external source, thereby maintaining energy balance within the system.

In some examples, boundary conditions tailored to the geometry and thermal characteristics of the unit cell supplement the periodically developed heat transfer equations. In some examples, the methodology enables the design of heat transfer devices whose purpose is to transfer thermal energy from one fluid to at least one other fluid. This means that there may no external heat source. In some examples, adiabatic boundary conditions (e.g. insulated surfaces or solid channel walls) or periodically connected surfaces (e.g. periodic boundary conditions for the heat flux) are considered.

In some examples, the optimization framework employs the periodic temperature part $\theta\_i$ and the exponential temperature change rate $\lambda\_i$ to characterize the thermal behaviour of each material or fluid stream i of the unit cell under steady-state conditions.

In other examples, where the fluid streams are thermally balanced, the framework employs the constant temperature gradient $\nabla T\_dev$ and periodically varying temperature part $T^*(x)$ to comprehensively characterize the thermal behavior of the unit cell under steady-state conditions. By determining these components, the model facilitates the prediction of temperature distribution patterns within the unit cell, thereby identifying optimized geometrical configurations that minimize thermal resistance and enhance heat transfer efficiency.

Optionally, the thermal optimization process involves solving for the temperature field within the channel, which is governed by the energy conservation equation applicable to a single unit cell. This equation encompasses both convective heat transfer, represented by the fluid's movement and its interaction with the temperature gradient, and conductive heat transfer, indicated by the thermal conductivity of the materials involved. The objective is to achieve an optimal balance between these modes of heat transfer, ensuring efficient cooling or heating performance of the device.

In some examples, the relationship between convective and conductive heat transfer mechanisms, as governed by the energy conservation equation can be tailored to a single unit cell. This dual-focus approach is designed to harness the synergies between the fluid's dynamic behavior, characterized by its movement and resultant interaction with temperature gradients, and the intrinsic conductive properties of the channel's materials. The aim is to intricately balance these heat transfer modes, optimizing the device's overall thermal performance for either cooling or heating applications.

Conversely, the conductive heat transfer component relies on the thermal conductivity of the channel's constituent materials. This aspect of heat transfer can be important in determining the rate at which heat can be conducted through the solid parts of the channel and across the fluid-solid interfaces. Optimizing conductive heat transfer involves selecting materials with appropriate thermal properties and designing the channel geometry to maximize the surface area available for heat conduction. This requires a careful balance, as too much solid material might impede fluid flow, while too little might not provide sufficient conductive pathways for heat transfer.

The optimization process may employ a mathematical formulation that encapsulates both convective and conductive heat transfer within a single unit cell. This formulation considers the periodically varying component of the temperature field, attributable to the constant heat flux applied (e.g. at the bottom surface of each unit cell), as well as the exponential or linear temperature rise/decrease (i.e. gradients) of each of the involved fluids, along each of the specified flow directions. The channel's design, such as the shape and distribution of solid structures within the fluid domain, can be effectively manipulated to modify the temperature field in a way that enhances thermal performance.

The optimization process can leverage the concept of a periodically developed temperature field, governed by an energy conservation equation that accounts for both convective and conductive effects. This approach enables the precise manipulation of temperature gradients within the channel, ensuring that the thermal conductivity of materials and the fluid's velocity profile are optimized to achieve the desired heat transfer efficiency.

In some examples, the following boundary conditions may be implemented:

1) Adiabatic, insulated surfaces, where the unit cell boundaries are in contact with the environment (to avoid heat transfer or heat losses towards the environment)
2) Periodic boundary conditions, at the top and bottom surfaces of the unit cell, when they are periodically stacked along the vertical direction to form a three-dimensional stack of N1×N2×N3 cells in total.

In some examples, the objective function and constrains that are considered are the heat transfer rate between both channels, or the thermal effectiveness of the heat transfer from one fluid to the others, while maintaining a limited pressure drop across each channel/for each involved fluid.

In some examples, the method may be used to configure heat transfer devices whose purpose is to cool a certain heat source by means of different fluid streams, each perhaps having a different main flow direction. In such a case, other boundary conditions may be implemented, like for example a heat flux at the bottom surface of the device (in contact with an external heat source to be cooled).

In some examples, the optimization process seeks to determine an exponential or linear temperature rise/decrease off each involved fluid flow. The exponential temperature gradient is derived as an eigenvalue for the periodic heat transfer equations, while the linear temperature change (constant gradient) is determined from the overall energy balance for all involved fluid streams.

In some examples, the periodically developed heat transfer equations are solved iteratively to refine the temperature distribution within the channel. This involves adjusting the shape and configuration of both the solid and fluid domains to improve thermal performance, based on involved fluid stream properties and operating conditions (e.g. mass flow rate, inlet temperature) and the thermal properties of the materials used. The optimization process is guided by numerical methods and software tools designed for thermal analysis, allowing for precise control over the design parameters to achieve desired heat transfer characteristics.

In some examples, the process of solving the periodically developed heat transfer equations is executed iteratively, focusing on refining the temperature distribution within the heat transfer channel. This iterative process can be important in optimizing the thermal performance of the channel. It can involve adjustments to the geometry and layout of the solid and fluid domains within the unit cells that make up the channel. The optimization is particularly sensitive to the difference in fluid properties and flow directions of each involved fluid stream.

In these examples, the optimization leverages the distinct thermal properties of the materials constituting the solid and fluid domains. The objective can be for example to maximize the thermal effectiveness, hence the heat transfer rate from one fluid to the other stream(s) for a given steady mass flow rate of each fluid, ensuring that the pressure drop across the flow channels does not exceed a predetermined threshold. This can be achieved by methodically altering the shape of the solid domain, which, in turn, modifies the flow and temperature fields within the channel. The optimization accounts for the spatial periodicity of the material distribution, ensuring that the design improvements are uniformly applied across all unit cells in the channel.

The optimization process can employ numerical methods to solve the heat transfer equations, which govern the temperature field within the channel. These equations account for linearly/exponentially varying part of the temperature field, and a periodically varying part, attributed to the heat transfer from one fluid flow to the other(s). The solution to these equations involves solving for the exponential temperature change rate (or eigenvalue) for each fluid flow.

The use of finite element methods for discretizing the heat transfer equations allows for the accurate simulation of temperature fields within complex geometries. This facilitates a thorough exploration of design alternatives and the identification of optimal configurations that enhance the thermal efficiency of the heat transfer channel.

Moreover, the optimization process may include the application of boundary conditions that reflect the physical constraints of the heat transfer channel.

In some examples, fluid flow through the heat transfer channel is determined by utilizing periodically developed flow equations. These equations are formulated to describe the behavior of an incompressible Newtonian fluid, characterized by its density and viscosity, moving through the designed structure of the channel. The flow equations incorporate a balance of forces, including the developed pressure field, viscous forces, and any applied forces, to accurately predict the velocity and pressure fields within the channel. This comprehensive approach ensures that the fluid mechanics are accurately represented in the optimization process, enabling the design of efficient heat transfer devices.

In some examples, the periodically developed flow equations are solved within the constraints of a single unit cell, leveraging the spatial periodicity of the material distribution. This methodology simplifies the optimization process by focusing on the behavior of each involved fluid within a representative section of the entire channel (the periodic flow equations are solved for each of the at least two involved fluid streams). The equations account for steady-state conditions and impose periodicity conditions on the velocity and pressure fields, ensuring that the fluid flow is consistently developed across the array of unit cells. By solving these equations, the design method can effectively determine the optimal shape of the fluid domain that minimizes energy loss and maximizes thermal performance.

In some examples, the approach to solving the periodically developed flow equations within the constraints of a single unit cell takes into account the spatial periodicity of the material distribution. This strategic focus on a representative segment of the entire channel serves to streamline the optimization process, specifically by concentrating on the dynamics of fluid flow within this confined space. This provides the ability to model fluid behavior under steady-state conditions, cf. the flow and pressure distributions are not transient but remain constant over time.

To enforce consistency in fluid dynamics across the entire heat transfer channel, the periodically developed flow equations incorporate periodicity conditions for both the velocity and pressure fields. These conditions mandate that the flow characteristics at any given point within a unit cell must be identical to those at corresponding points in adjacent unit cells. This repetitive pattern is crucial for the optimization process, as it allows for the prediction of fluid behavior throughout the channel based on the analysis of just one unit cell. By adhering to these conditions, the method ensures that the flow through each of the (at least two) channels maintains a uniform profile, thereby avoiding disparities that could lead to inefficient thermal management.

The pressure field may include a periodic pressure part and a linearly varying part (i.e. a part or component with a constant pressure gradient). The latter determines the net pressure drop over each unit, and hence the total pressure drop over the device (for the specific fluid in question).

The periodically developed flow equations are integral to identifying the optimal configuration of the fluid domain within the unit cell. This optimization aims to achieve the most efficient path for fluid flow, thereby reducing energy loss due to friction and turbulence. In practical terms, the equations help to delineate the shape and orientation of the solid structures within the unit cell that direct the flow. These structures, such as fins or baffles, are designed to facilitate heat transfer from the solid domain to the fluid while minimizing resistance to flow. By optimizing these structures, the design method seeks to enhance the overall thermal performance of the heat transfer channel.

The process of solving these equations involves a detailed analysis of the fluid dynamics within the unit cell, taking into account various parameters such as fluid density, viscosity, and the pressure gradient. There may be an overall constant pressure gradient, which gives rise to the linearly varying component of the pressure field. This overall constant pressure gradient is determined by the mass flow rate. On the contrary, when the mass flow rate is not fixed in advance, this constant overall pressure gradient can be selected/imposed in order to limit the total pressure drop (or pumping power) over the channel. Hence, the mass flow rate may be specified, or the pressure gradient may be imposed.

The equations model the momentum conservation in the fluid, which is affected by forces such as pressure gradients and viscous forces, alongside the incompressibility condition that dictates a constant fluid volume. The consideration of these factors is important for accurately predicting the fluid's velocity and pressure distribution, which in turn informs the design of the unit cell's geometry.

Moreover, the optimization process facilitated by these equations may be not a one-time calculation but an iterative procedure that progressively refines the design. Each iteration adjusts the shape and arrangement of solid structures within the unit cell based on the outcomes of the flow equations. This iterative approach ensures that the design converges towards an optimal configuration that achieves the desired balance between effective heat transfer and minimal fluid resistance.

Various suitable numerical methods to accurately represent the dynamics of the flow can be used. These methods include, but are not limited to, simple algorithms, PISO algorithms, and fractional step methods, which are implemented through a range of finite element types. While a variety of finite elements can be utilized, continuous Galerkin elements may be used in some examples due to their effectiveness in providing a robust numerical solution. This versatile approach allows for the fluid flow equations to be transformed into a system of algebraic equations that can be readily solved, ensuring the numerical simulation closely mirrors the realistic operational conditions of the heat transfer channel.

In some examples, to manage the complex nature of fluid flow within the optimized channels, the flow equations are discretized using mixed finite elements. This approach allows for a direct translation of the weak formulation of the flow equations into a solvable system of algebraic equations. The choice of finite elements, such as the Taylor-Hood elements for velocity and pressure fields, facilitates an accurate and efficient numerical solution to the flow equations. This discretization process can be important for better capturing the behavior of the fluid flow and ensuring that the optimization reflects realistic operational conditions of the heat transfer channel.

In some examples, to address the complexities of fluid flow in optimized channels, segregated flow algorithms are predominantly utilized instead of mixed finite elements. Segregated flow algorithms are less demanding in terms of computational resources, making them more suitable for large meshes and complex geometries that are typical in realistic operational conditions of heat transfer channels. This approach efficiently handles computational processes on most standard computing systems by simplifying the flow equations into a solvable system of algebraic equations without the extensive memory requirements of mixed finite element methods. Although mixed finite elements, such as the Taylor-Hood elements for velocity and pressure fields, can offer computational speed advantages on systems with ample memory, the use of segregated flow algorithms generally provides a more practical solution for managing fluid behavior and optimizing the design under typical hardware constraints.

Optionally, an initial geometric configuration of the solid structures in the unit cell includes a plurality of pillar shapes, each positioned between a pair of walls, wherein at least one wall serves as a top wall of one thermal energy transfer channel and a bottom wall of another, vertically adjacent thermal energy transfer channel within the vertically stacked arrangement.

The initial geometric configuration of solid structures in the unit cell can be a pillar shape positioned between two walls/plates. The unit cell may define at least two vertically arranged channels. A top plate, a middle plate and a bottom plate may be provided, wherein there is a pillar between each pair of plates. Each pillar may conduct the heat more easily from the fluid in the first channel to the fluid in at least one other channel. There may thus be a solid structure in each of the vertically stacked flow channels within the unit cell.

Effective heat transfer/exchange between different fluids is important for a wide range of applications, from electronic device cooling to industrial heat exchangers. The improved thermal performance not only enhances the operational efficiency of these applications but also contributes to their longevity and reliability.

The strategic choice of this initial geometric configuration allows for a systematic exploration of modifications during the optimization process. Through iterative shape optimization, the method evaluates various alterations to this basic model, seeking improvements in thermal performance by tweaking the shape, size, or arrangement of the pillars (cf. in each of the at least two fluid channels) and the plates. This process is guided by a set of predefined criteria, including thermal performance thresholds and material constraints, ensuring that each modification contributes positively to the device's overall effectiveness.

Optionally, the optimization is performed while adhering to predetermined constraints including at least a minimal material thickness of the at least one solid structure or walls.

By imposing such constraints, the method balances the need for efficient thermal energy transfer with the practical considerations of material properties and device longevity. This careful consideration of material constraints not only contributes to the reliability and safety of the optimized thermal energy transfer device but also enables to obtain designs that are both functionally effective and structurally sound.

Structural integrity is important to the operational viability of any thermal energy transfer device. It ensures that the device can withstand the physical stresses and thermal cycles associated with its operation without succumbing to deformations or fractures. The stipulation of a minimal material thickness is a direct measure to counteract potential structural failures. Thicker materials inherently possess a greater resistance to stresses, including those induced by thermal expansion or contraction, thus reducing the risk of cracking or material degradation over time. By setting a minimum threshold for material thickness, the method proactively safeguards the device against the rigors of operational demands, enhancing its longevity and reliability. Additionally or alternatively, a minimal wall thickness may also be necessary to prevent mixing of the fluid flows. This mixing may otherwise be an undesired outcome of the optimization procedure. Less material between the involved fluid flows may locally result in a better heat transfer occasionally.

Durability, on the other hand, extends beyond mere resistance to physical stresses, encompassing the ability of the thermal energy transfer device to maintain its performance characteristics over time. Thinner materials, while potentially beneficial from a thermal conductivity standpoint, may succumb to wear, erosion, or corrosion at an accelerated rate, particularly in harsh operational environments. By mandating a minimum material thickness, the optimization process inherently accounts for these environmental factors, ensuring that the device not only performs optimally from the outset but continues to do so throughout its operational lifespan.

Furthermore, the integration of material thickness constraints into the optimization process represents a deliberate balancing act between the pursuit of thermal efficiency and the practicalities of material science, especially when the design is used for a manufacturing device to manufacture at least in part the physical object, or an intermediate object based on which the at least in part the physical object can be built.

In the optimization process of the thermal energy transfer device, the roles of objective functions and constraints can be interchangeably utilized depending on the design goals. For example, optimizing for minimal pumping power or pressure drop for each of the involved fluid flows/streams in the fluid channels could be set as the objective function, while performance may simultaneously act as a constraint. This approach allows for flexibility in prioritizing different aspects of device performance, such as minimizing pressure drop for a given performance level or maximizing thermal efficiency within certain operational limits.

This adaptive strategy ensures that the device meets specific operational criteria, which can be either constraints or objective functions based on the desired outcomes. Such a dynamic approach to setting optimization criteria facilitates a tailored design process, where various performance parameters can be adjusted to optimize the overall efficiency and functionality of the device. In essence, the optimization is conducted based on a set of criteria that may include both constraints and objective functions, effectively allowing the design to meet diverse and potentially competing requirements.

Optionally, the minimal material thickness is determined by solving an Eikonal equation.

This approach allows for the precise calculation of the minimal thickness required to maintain structural integrity, while optimizing for performance. The use of the Eikonal equation in determining material thickness constraints ensures that the optimized design is not only effective in thermal energy transfer but also adheres to important structural requirements.

The Eikonal equation, traditionally used in various fields such as optics, wave theory, and computational geometry, is adept at modeling the propagation of waves or movements through a medium. In the context of optimizing a thermal energy transfer device, it is repurposed to calculate the shortest path or minimal boundary that can withstand physical forces, thereby defining the least material thickness that still maintains the structural soundness of the device.

This approach is particularly beneficial because it accommodates complex geometrical shapes and topologies often encountered in optimized thermal devices, where the distribution and direction of thermal energy and mechanical stress can vary significantly across the device.

By integrating the solution of the Eikonal equation into the optimization process, the method ensures that each unit cell, and by extension, the entire thermal energy transfer device, is designed with solid structures that are not only thermally efficient but also mechanically resilient. This balance is critical because overly thin structures, while potentially beneficial for thermal transfer due to decreased thermal resistance, may be prone to failure under mechanical load or over long-term operation. Conversely, excessively thick structures may offer robustness but at the cost of reduced thermal performance due to increased material mass and thermal resistance.

The use of the Eikonal equation approach allows for a more tailored design process that considers the intricate interplay between thermal efficiency and structural integrity. By providing a mathematically rigorous method to calculate minimal material thickness, the method minimizes the risk of over-engineering the device, which can lead to unnecessary material usage, increased costs, and potentially detrimental effects on thermal performance. Moreover, the use of the Eikonal equation approach can effectively enhance the predictability and repeatability of the design outcomes, facilitating a more efficient development cycle for thermal energy transfer devices by reducing the need for extensive trial and error or empirical testing.

Additionally or alternatively, mixing of the fluids can be better avoided by ensuring a non-zero wall thickness after optimization. A wall of zero thickness between the fluid streams might result in better thermal performance, but at the same time is technically infeasible as it impedes a correct functioning of the heat transfer device.

Optionally, the method further comprises the step of conducting remeshing operations on materials represented discretely by mesh structures within the unit cell, subsequent to one or more iterations of boundary surface modification of the at least one solid structure, wherein the remeshing operations are adapted to integrate, based on one or more remeshing criteria, discrete geometric entities within the unit cell into a unified mesh framework.

All materials represented discretely on a mesh within a unit cell, including fluids, walls, and solid structures, can be remeshed. This capability extends not only to the surfaces that define the boundaries of solid materials but also to the volumes occupied by fluids, facilitating computational fluid dynamics (CFD) analysis.

These remeshing operations can be important for maintaining the accuracy and integrity of the geometric representation as the optimization process progresses. By adapting the mesh to reflect changes in the geometry, the method ensures that subsequent optimization iterations are based on accurate models, thereby improving the reliability of the optimization process. As these solid structures are altered to optimize thermal energy transfer efficiency, their geometric boundaries invariably change. To accurately represent these changes, materials delineated by mesh structures in computational models undergo remeshing. This process adjusts the density and arrangement of the mesh to align with the new geometric contours of the solid structures, ensuring the model accurately reflects the updated design.

Remeshing can preserve the geometric fidelity of the model throughout the optimization process. Geometric fidelity refers to the degree to which the computational model accurately mirrors the real-world physical dimensions and shapes of the device's components. High geometric fidelity ensures that simulations run on the model produce results that closely approximate the behavior of the actual device. By ensuring that each iteration of optimization is based on a model that accurately represents the current state of the device's design, the reliability of the optimization process is significantly enhanced. This reliability is crucial for achieving a design that meets or exceeds the target performance criteria without necessitating excessive iterations or revisions.

Adapting the mesh to reflect geometric changes promptly allows for more efficient design iteration. Accurate and detailed models are better suited for integration with production equipment, especially in the context of advanced manufacturing techniques such as additive manufacturing or precision etching. These techniques often require detailed geometric information to produce components faithfully to the design specifications.

Optionally, the production equipment comprises at least one of an additive manufacturing system or an etching system, which is configured for fabricating at least parts of the thermal energy transfer channel with $N1 \times N2 \times N3$ identical unit cells based on the optimized design parameters.

Production equipment, such as additive manufacturing systems or etching systems, configured for fabricating parts of the thermal energy transfer channel based on the optimized design parameters, presents a direct pathway from optimization to manufacturing. This integration of design optimization with production capabilities significantly enhances the practical applicability of the optimized designs, facilitating the rapid and accurate production of thermal energy transfer devices. The ability to directly translate optimized design parameters into physical objects (or objects such as molds from which (part of) the objects can be built) effectively improves the design cycle for thermal energy transfer devices.

By tailoring the production equipment to utilize optimized design parameters directly, the method eliminates traditional barriers that often exist between design and manufacturing. This includes the reduction of manual adjustments or reinterpretations of design data, which can introduce errors or inefficiencies. Additive manufacturing, with its layer-by-layer construction capability, is especially suited to producing complex geometries that are a result of optimization processes, allowing for the realization of intricate designs that may be difficult or impossible to manufacture with conventional methods. Etching systems, similarly, provide precision in creating detailed patterns and structures necessary for the enhanced performance of these devices.

This seamless integration significantly enhances the speed at which optimized designs can be tested and refined. Since the design parameters can be directly fed into the production equipment, prototypes and final products can be produced much more quickly compared to traditional methods that require intermediary steps. Moreover, the ability to rapidly produce physical manifestations of optimized designs allows for a more dynamic and responsive development cycle. The reduced development time also facilitates a more agile response to emerging needs or changes in requirements, enabling industries to adapt more swiftly to market demands.

Additive manufacturing, in particular, offers the flexibility to produce small batches of customized designs with minimal additional cost or time. In some examples, additive manufacturing is used to make a mold that can be used in another manufacturing device to produce the optimized device, or at least a part thereof.

Optionally, a plurality of unit cells are arranged in a matrix arrangement, each said unit cell comprising a delineated spatial configuration within which, for each of the at least first and second thermal energy transfer channels therein, is incorporated the one or more discrete solid structures surrounded by thermal fluid.

This matrix arrangement not only facilitates scalability and customization of the thermal energy transfer device but also ensures uniformity and repeatability in the design and manufacturing processes. By structuring the thermal energy transfer device as an assembly of identical unit cells arranged in a grid or matrix, this approach provides a modular framework that can be easily scaled up or down according to specific requirements. This scalability is crucial for adapting the thermal energy transfer device to different sizes or capacities, thereby enhancing its applicability across a wide range of use cases and industries.

Moreover, the uniformity and repeatability afforded by the matrix arrangement are significant for ensuring consistency in the manufacturing process. Each unit cell, being a repeatable segment of the device, ensures that every part of the thermal energy transfer device maintains the same high standards of performance. This uniformity can be important for producing devices that are reliable and efficient, as variations in design or construction can lead to discrepancies in performance. The repeatability of the design, facilitated by the standardized unit cells, also streamlines the manufacturing process, enabling faster production times and reducing the likelihood of errors.

Consistency in the design of thermal energy transfer devices is critical for ensuring that each device performs as expected, without significant deviations in efficiency or effectiveness. This consistency is particularly important in applications where precise thermal management is imperative, such as in electronic devices, aerospace components, or chemical processing equipment. By maintaining a high level of design consistency, the matrix arrangement contributes to the reliability and predictability of the thermal energy transfer devices.

Furthermore, the ability to tailor the device to specific thermal management requirements is a direct consequence of the modular nature of the matrix configuration. Adjusting the number and arrangement of unit cells allows for fine-tuning of the device's performance, making it possible to optimize for different operational conditions or to meet specific design goals. This customization capability is invaluable for addressing the diverse and often complex thermal management challenges encountered in various applications. Whether optimizing for maximum heat transfer efficiency, minimizing pressure drop, or accommodating unique fluid flow patterns, the improved design and manufacturing according to the disclosure, enabled by the matrix arrangement of unit cells, ensures that the thermal energy transfer device can be precisely adapted to meet these needs.

Optionally, the optimization process further comprises variations in the wall structures, including at least one of the wall structure positioned between the first and second thermal energy transfer channels or any other top or bottom walls of said channels, wherein, for sides of the unit cell that interface with adjacent unit cells within the arrangement of $N1 \times N2 \times N3$ identical unit cells, geometric wall modifications within a unit cell at one boundary are mirrored at the opposing boundary in order to maintain structural coherence and assembly compatibility across the thermal energy transfer device.

The optimization process that includes variations in the wall structures, such as those walls positioned between the thermal energy transfer channels or the outer walls of these channels, significantly enriches the method with an enhanced layer of flexibility and precision in the design optimization of thermal energy transfer devices.

Adjustments to the thickness, material composition, or even the surface texture of these walls can influence the rate of heat transfer between channels, the flow dynamics of thermal fluids, and the overall thermal efficiency of the device. Such versatility in design adjustments permits the tailoring of thermal energy transfer devices to specific operational needs, enhancing their performance and efficiency in a variety of applications.

Furthermore, the mirroring of geometric wall modifications across unit cell boundaries ensures structural coherence and assembly compatibility throughout the device. This feature is particularly important when scaling the design from a single unit cell to a full thermal energy transfer device composed of multiple, identical unit cells arranged in a matrix. The mirrored modifications ensure that each unit cell aligns perfectly with its neighbors, maintaining the integrity and uniformity of the device's structure and performance. This level of coherence is important for the seamless assembly of the unit cells into a larger, integrated system, avoiding discrepancies that could compromise the device's functionality or efficiency.

Optionally, the thermal energy transfer device is structured as a three-dimensional matrix by arranging the unit cells in $N1 \times N2 \times N3$ dimensions, where $N3$ represents the number of unit cells stacked vertically.

Optionally, the thermal energy transfer device comprises multiple thermal energy transfer channels configured to support multi-directional fluid flow, and wherein the geometric optimization of the solid structures within each unit cell accounts for flow directionality.

By accommodating multiple thermal energy transfer channels configured to support multi-directional fluid flow, the method provides a significant technical advantage in terms of optimizing for complex operational conditions. The ability to account for flow directionality in the geometric optimization of the solid structures within each unit cell allows for the tailored design of thermal energy transfer devices that are capable of handling diverse and dynamic fluid flow patterns.

By ensuring that the geometric configuration of solid structures within each unit cell is optimized for the specific flow directions encountered, the device can achieve improved thermal management. This optimization accounts not only for the direction but also for the nature of the fluid flow, whether laminar or turbulent, and adjusts the design accordingly to enhance heat transfer efficiency.

Optionally, the geometric shape optimization of solid structures of the thermal energy transfer channel at a unit cell level employs a gradient-based optimization technique that uses adjoint-based optimization for calculating gradients during the iterative process, wherein the gradient-based optimization technique is used to iteratively adjust the shape of the one or more solid structures, and wherein shape sensitivities derived from the adjoint-based optimization are used to guide shape modifications.

The employment of a gradient-based optimization technique, particularly one that uses adjoint-based optimization for calculating gradients during the iterative process, presents an improved method for refining the shape of solid structures within the thermal energy transfer device. This technique allows for precise adjustments to be made based on shape sensitivities derived from the adjoint-based optimization, facilitating a more targeted and effective approach to optimizing the device's performance. This provides for an enhanced capability to systematically improve the geometric configuration of the thermal energy transfer device, leading to optimized designs that are specifically tailored to achieve high levels of thermal efficiency.

Gradient-based optimization relies on the calculated gradients to guide the optimization process toward a design that minimizes or maximizes the desired design criteria (e.g. performance criteria). In the context of thermal energy transfer devices, such design criteria often revolve around thermal efficiency, encompassing factors like heat transfer enhancement and minimization of thermal resistance. The adjoint-based method stands out by efficiently providing accurate gradients, even for complex systems with a large number of design variables, which is typical in the detailed geometric configuration of solid structures within thermal channels.

By employing adjoint-based optimization, this method can precisely identify the direction and magnitude of changes needed in the device's geometry to improve its performance. This precision stems from the method's ability to calculate shape sensitivities, which quantify how small changes in the geometry affect the performance. With this information, the optimization process can make informed, targeted adjustments to the design.

The geometric configuration of the thermal energy transfer device can be systematically refined, ensuring that each iteration brings the design closer to the optimal configuration.

Optionally, the set of criteria for optimization include a performance of the device, and/or includes constraints based on operating conditions, namely at least one of a maximum pumping power, a maximum pressure drop requirement, or fixed mass flow rate.

This enables the production of thermal energy transfer devices that are not only optimized for maximum performance but are also viable for implementation in real-world applications.

By integrating thermal performance as a primary criterion, the optimization process aims to maximize the efficiency of heat transfer mechanisms within the device. This could involve optimizing the geometry of solid structures within the thermal energy transfer channels to facilitate better heat exchange between the thermal fluid and the device, thereby improving the overall thermal efficiency of the system.

Including constraints based on operational conditions ensures that the designs are not only theoretically efficient but also practically viable. For instance, by setting limits on maximum pumping power, the optimization process produces designs that can operate within the energy budgets of existing systems, making them more applicable to a wide range of real-world applications. Similarly, constraints on maximum pressure drop and fixed mass flow rate can for example ensure that the device can be integrated into existing thermal management systems without necessitating significant modifications to those systems.

In some examples, each of said channels is defined by an elongated cross-sectional shape. However various other shapes are also envisaged.

In some examples, each channel may have its own inlet and outlet section, so that the fluid inside does not flow through the channel below or above. In such a case there is no direct fluid communication between the first and second channels.

In some examples, there is a direct fluid communication between the first and second channels. For example, an outlet portion of the first thermal energy transfer channel may be in fluid communication with an inlet portion of the second thermal energy transfer channel.

While direct fluid communication between the vertically stacked channels is not necessary, in some examples, a manifold or collector may be arranged that connects these channels to a pipeline system. This setup allows for the introduction of specific fluids into each channel independently. The channels can be interconnected through these manifolds, but such coupling is optional, providing flexibility in the system design.

For instance, a practical application could involve a lower channel through which a cold liquid stream flows, while the upper channel carries a gas. In this configuration, the water and gas are completely segregated; the gas moves from an inlet to an outlet exclusively within the upper layer of the unit cell, and similarly, the water travels from its respective inlet to an outlet within the lower layer, ensuring that there is no contact between the two fluids.

Optionally, a number of unit cells along the length of the matrix of unit cells, denoted as N1, is greater than 1, with a preference for configurations where N1 exceeds 5, and more preferably, exceeds 10. Additionally, the number of unit cells along another dimension, represented as N2, is equal to or greater than 1. This configuration allows for scalable and adaptable designs that can be tailored to meet various operational demands and thermal management capabilities.

Multiple unit cells may form a tube, possibly with fins mounted on top of them, over which the second fluid (e.g. liquid or gas) may flow. The device may be arranged to expand not only laterally but also vertically, by incorporating $N1 \times N2 \times N3$ unit cells, where N3 indicates the number of layers or unit cells stacked along the vertical axis. This vertical stacking approach enables the creation of multiple "layers" of thermal energy transfer channels, each layer serving as a distinct thermal management level within the overall structure of the device. By integrating unit cells vertically, the invention facilitates complex, multi-layered thermal interactions, allowing for improved heat dissipation and thermal control across several planes. This configuration can be used to optimize the spatial distribution of heat transfer surfaces and enhances the device's capacity to manage varying thermal loads efficiently. Furthermore, the vertical integration of the unit cells ensures a compact design while maximizing the thermal transfer area, making it particularly suitable for applications where space and efficiency are important.

According to an aspect, the invention provides for a system for optimizing geometric configurations of a thermal energy transfer device as a physical object, the system comprising: an input module configured to obtain target design criteria of the thermal energy transfer device, the device featuring at least a first thermal energy transfer channel and a second thermal energy transfer channel in a vertically stacked arrangement, each channel defined by a wall structure positioned between the channels for maintaining separation, and a plurality of solid structures arranged within each channel to facilitate thermal energy transfer; a partitioning module, configured to define, based on the target design criteria, a unit cell dimensioned to replicate the thermal energy transfer device through a formation of $N1 \times N2 \times N3$ identical unit cells, each unit cell representing a repeatable segment of both the first and second thermal energy transfer channels, including a portion of the wall structure arranged between the channels; an optimization module that includes a processing unit for executing a shape optimization of one or more solid structures within at least the first and second thermal energy transfer channels at the unit cell level, the optimization adjusting the geometric design of solid structures within a single unit cell based on criteria emphasizing performance, involving iterative adjustments to the boundary surfaces of the solid structures within the repeatable segment defined by the unit cell, continuing until a stop criterion of either achieving a predetermined performance threshold or reaching a maximum number of optimization iterations is met; an output module configured to output optimized design parameters that detail the geometric configuration of solid structures within each unit cell of the thermal energy transfer device; a manufacturing module that is configured to facilitate the transfer of data, based on the optimized design parameters, to production equipment for the manufacturing of an optimized physical object representing at least a part of the thermal energy transfer device structured with $N1 \times N2 \times N3$ identical unit cells.

According to an aspect, the invention provides for a method for constructing a thermal energy transfer device, comprising the steps of: obtaining target design criteria of the thermal energy transfer device, the device featuring at least a first thermal energy transfer channel and a second thermal energy transfer channel in a vertically stacked arrangement, wherein a wall structure is positioned between the channels for maintaining separation, and wherein a plurality of solid structures are arranged within each channel to facilitate thermal energy transfer, wherein, based on the target design criteria of the physical object, a unit cell is defined which is dimensioned such that the thermal energy transfer channel is formed by $N1 \times N2 \times N3$ identical unit cells; optimizing the shape of the at least one solid structure at a single unit cell level using the computer-implemented method of the disclosure; assembling the optimized unit cells into a thermal energy transfer device according to predefined design specifications of the thermal energy transfer device.

According to an aspect, the invention provides for a thermal energy transfer device constructed employing the computer-implemented method according to the disclosure, wherein the thermal energy transfer device comprises a matrix of solid structures arrayed in at least one dimension, these structures are derived from a single unit cell model that has been subjected to one or more optimization process.

It will be appreciated that the first channel of the thermal energy transfer device may incorporate various types of solid structures, which can be identical to or different from those in the second channel.

It will be appreciated that any of the aspects, features and options described in view of the methods apply equally to the systems and the described thermal energy transfer devices. It will also be clear that any one or more of the above aspects, features and options can be combined.

BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:

Fig. 1 shows a schematic diagram of a top view of an arrangement of unit cells;
Fig. 2 shows a schematic diagram of a perspective view of an arrangement of unit cells;
Fig. 3 shows a schematic diagram of a perspective view of an arrangement of unit cells;
Fig. 4 shows a schematic diagram of a perspective view of an arrangement of unit cells with solid structures therein;
Fig. 5 shows a schematic diagram of a perspective view of an arrangement of unit cells with solid structures therein;
Fig. 6 shows a schematic diagram of a method for obtaining optimized shapes within a unit-cell for an exemplary cooling channel; and
Fig. 7 shows a schematic diagram of a perspective view of a thermal transfer device.

DETAILED DESCRIPTION

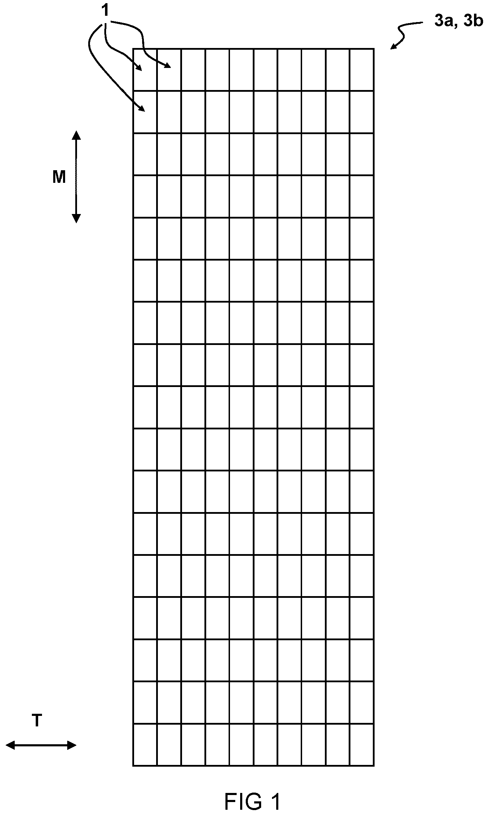

Fig. 1 shows a schematic diagram of a top view of an arrangement of unit cells 1 defined in a computer-implemented method for optimizing geometric configurations of a thermal energy transfer channel as a physical object. In this method, target design criteria of the physical object are obtained. Based on the target design criteria of the physical object, a unit cell is obtained which is dimensioned such that the thermal energy transfer device is formed by $N1 \times N2 \times N3$ identical unit cells, each unit cell forming a repeatable segment of at least the first thermal energy transfer channel 3a and the second thermal energy transfer channel 3b, with a wall portion of the wall structure arranged between said channels. By means of a processing unit, a shape optimization of at least one or more solid structures within at least the first and second thermal energy transfer channels of the thermal energy transfer device at the unit cell level is performed, wherein the geometric design of solid structures of a single unit cell is optimized based on a set of criteria, wherein the shape optimization involves iterative modification of the boundary surfaces of the one or more solid structures in the repeatable segment of at least the first thermal energy transfer channel and the second thermal energy transfer channel defined by the single unit cell, and wherein the shape optimization of the single unit cell is performed until a stop criterion is met, the stop criterion being defined as achieving a predetermined threshold of performance or reaching a maximum number of optimization iterations. Furthermore, optimized design parameters representing at least geometric configuration of solid structures in each unit cell of the thermal energy transfer device are output. Data based on the outputted optimized design parameters is transferred to production equipment to manufacture an optimized physical object representing at least a part of the thermal energy transfer device with $N1 \times N2 \times N3$ identical unit cells.

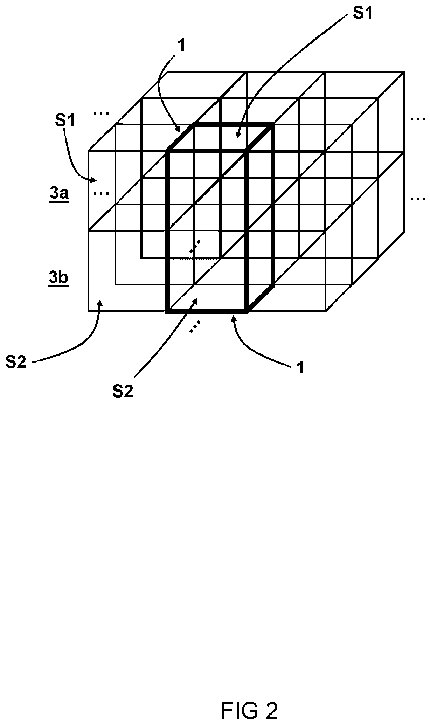

Fig. 2 shows a schematic diagram of a perspective view of an arrangement of unit cells 1. This example illustrates that within a unit cell 1, which forms a repeatable segment S1 of at least the first thermal energy transfer channel 3a and a repeatable segment S2 of at least the second thermal energy transfer channel 3b, a three-dimensional shape optimization may be performed of solid structures therein (not shown). Only a number of a total number of unit cells are shown, however different numbers and/or arrangements are possible. Various configurations are envisaged. The thermal energy transfer channel 3 may be subdivided in a number of unit cells, and advantageously, the shape optimization may be performed for a single unit cell.

Instead of performing a complete shape optimization, unit cells are defined and used for optimization at smaller scale. The thermal transfer channel can be constructed from a matrix of unit cells. Since there is a repetition pattern, the optimization is performed at the unit cell level instead of a full optimization for an entire channel. This not only significantly reduces the required computing power, but also allows the repetition (pattern) to be enforced while performing the shape optimization. The structural geometries and dimensions, cf. "shapes", are optimized at the level of a unit cell, which is then repeated repetitively in a channel.

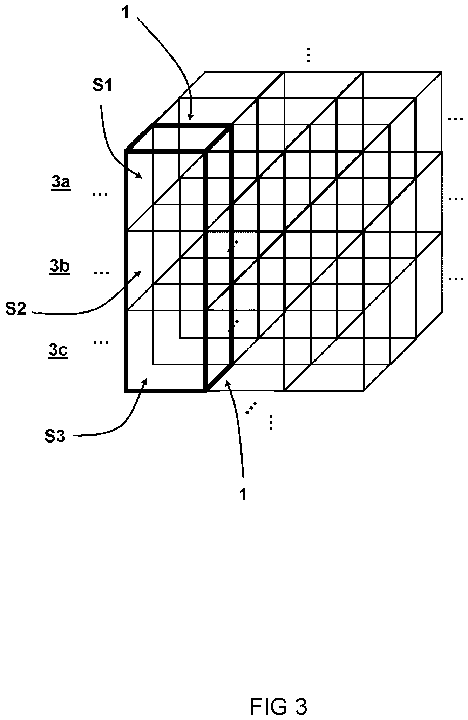

Fig. 3 shows a schematic diagram of a perspective view of an arrangement of unit cells 1. In this example, each unit cell 1 forms a repeatable segment S1 of a first thermal energy transfer channel 3a, a repeatable segment S2 of a second thermal energy transfer channel 3b, and a repeatable segment S3 of a third thermal energy transfer channel 3c. This illustrates, that the unit cell 1 can form repeatable segments of a different number of thermal energy transfer channels. In this way, complex devices may be obtained, with different channels, each channel allowing a same or different flow direction with respect to one or more other channels.

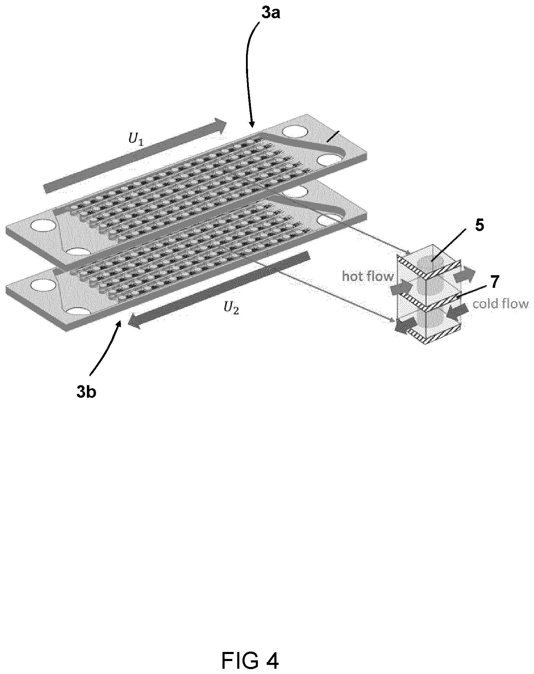

Fig. 4 shows a schematic diagram of a perspective view of an arrangement of unit cells 1 with solid structures 5 therein. As can be seen, for each unit cell the same structure is employed, building up the entire thermal energy transfer channels 3a, 3b. The exemplary embodiment illustrates a two-fluid counter-flow heat exchanger containing two arrays of solid structures ("fins") in a periodic configuration. The flow direction of the hot and cold fluid are indicated as U1 and U2, respectively. Also a single unit (cell) for constructing the heat exchanger is shown in detail (zoomed in).

In this example, the thermal energy transfer device has at least a first thermal energy transfer channel 3a and a second thermal energy transfer channel 3b in a vertically stacked arrangement relative to one another, and wherein a wall structure 7 is positioned between the channels to maintain separation therebetween, and wherein, within each channel 3a, 3b, a plurality of solid structures are arranged in a periodic configuration for facilitating transfer of thermal energy from one fluid in one channel to another fluid in another channel, the channels being separated by a wall (cf. fluid communication and/or fluid flow mixing not allowed).

The shape of solid structures within individual cell units 1, which can be stacked together to form heat transfer channels, can be optimized. As only a single cell unit 1 is optimized, instead of the entire channel, the design method is computationally very cheap and results in a fast design cycle. This makes the design method especially suitable for designing heat transfer channels with a large surface area.

Conventional three-dimensional shape optimization methods for shape optimization of channels for heat exchangers, in which several fluid flows exchange heat between each other (while no heat losses occur towards the environment, are computationally very expensive. Usually, supercomputer infrastructure with hundreds to thousands of cores is required, and weeks of computational time. The computer-implemented method according to the disclosure enables generating optimized units for constructing heat transfer channels 3a, 3b. The three-dimensional shape of the channel walls and solid material within the unit cell 1 is optimized to obtain maximal performance of the heat transfer device. The optimized unit cells 1 (cf. optimized configuration) can be stacked in a two- or three-dimensional matrix or array to construct the entire heat transfer device. As such, each channel contains an array of optimized solid structures or fins in a periodic configuration. Various alternative arrangements and configurations are envisaged.

In fig. 4, the heat transfer device to be manufactured includes at least two channels 3a, 3b which are each constructed based on structures within identical unit (cells) stacked in a two-dimensional matrix or periodic array. The shape of the solid structure and channel walls in the unit cell can be optimized by performing the method of the disclosure. In the shown figure, the shapes (cf. geometric configurations) have not yet been optimized. Instead, this figure shows the initial design to start the optimization procedure, i.e. starting from two solid cylinders, each between solid plates as shown. Various design criteria may be employed.

Optionally, several fluid flows or streams might flow through the heat exchanger to exchange heat/thermal energy.

It will be appreciated that the terminology "fins" may refer to all solid material apart from the channel walls, which conduct the heat from the heat source to the fluid.

It will be appreciated that a maximal performance may be understood as achieving the high possible thermal effectiveness or heat transfer rate from one fluid to the other(s), for a given maximum pressure drop or pumping power for each involved fluid flow.

The optimized three-dimensional shape is usually rather complex, so manufacturing of the resulting heat exchanger may require advanced manufacturing techniques based on additive manufacturing, etching, hydroforming, or the like.

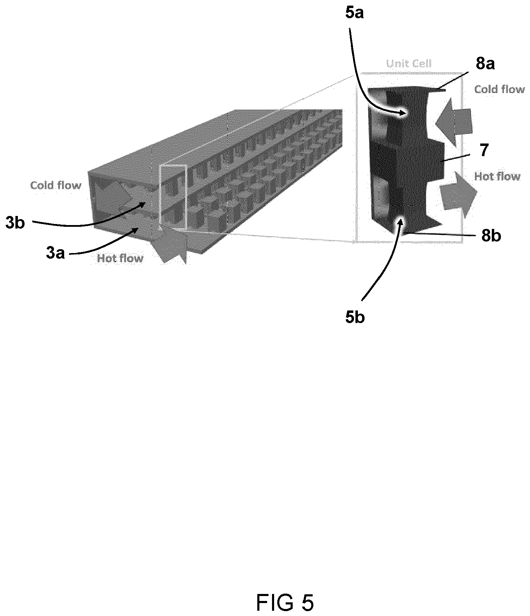

Fig. 5 shows a schematic diagram of a perspective view of an arrangement of unit cells with solid structures 5 therein.

In some examples, some parameters such as a choice of fluid(s), the choice of solid material(s), and the available space is provided as input. For instance, the input may be at least one of:

  1) fluid properties: density, dynamic viscosity, specific heat capacity, and/or thermal conductivity (or Prandtl number) of each fluid;
  2) solid material: e.g. thermal conductivity;
  3) overall thermal energy transfer device (e.g. heat exchanger) dimensions: e.g. the overall width, height, and length of the box in which the thermal energy transfer device should fit.

In some examples, a maximum allowable pumping power or pressure drop for each fluid is provided as input.

Additionally or alternatively, in some examples, a desired mass flow rate of each fluid, and/or a minimal solid thickness is provided. The minimal solid thickness may for example be a smallest manufacturable size of the fins or solid walls, depending on the additive manufacturing process or etching process for instance. In some examples, this may be determined based on structural (stress) constraints.

Additionally or alternatively, at least one of the following information may be provided or derived from other input parameters:

  - a number of units to be employed, along the length or width of the thermal energy transfer device (or its periodic array);
  - a number of channels to be employed along the height of the thermal energy transfer device ; or

a flow configuration: e.g. a cross-flow, counter-flow, parallel-flow, or any variant.

The output of the method may be a complete description of the three-dimensional geometry and shape of the solid material (structures/fins/channels) in the optimized unit cell, and as such a design of the entire thermal energy transfer device using the individual optimized unit cell can be employed.

The optimized shape of the solid material can be represented in many formats, for instance a table of vertices with their coordinates (x,y,z) and their connectivity (facets). Various output file formats like STL used in 3D printing can be employed. The output format may be usable for a Computer-Aided Design (CAD) program.

In some examples, the method starts with the overall dimensions of the thermal energy transfer device and the total number of channels and total number of units in the array, from which the dimensions of the (box-shaped) unit cell are determined.

In fig. 5, an exemplary counter-flow heat exchanger with two channels: one channels contains the hot flow, while the other contains the cold flow, is shown. However, various other configurations are possible.

Since in this example, two channels 3a, 3b are provided, each unit cell defines a top wall 8a, a middle wall 7, separating the two channels, and a bottom wall 8b. During optimization, the structural shapes and dimensions of walls 7, 8a, 8b, and solid structures 5a, 5b can be changed based on the set of criteria.

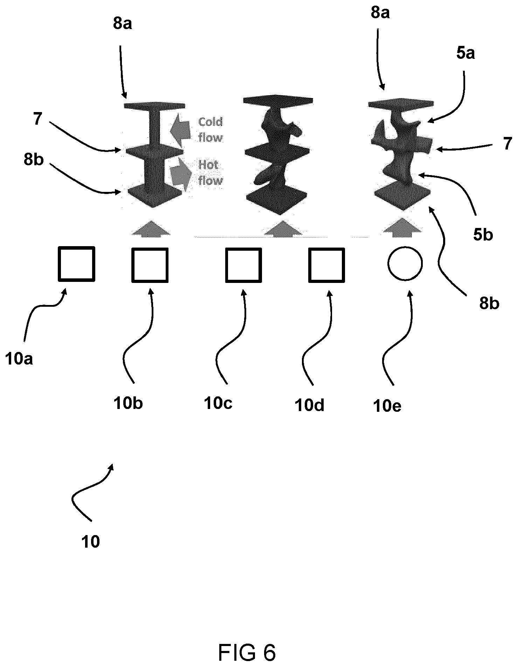

Fig. 6 shows a schematic diagram of a method for obtaining optimized shapes (cf. geometric configurations of solids) within a unit-cell for an exemplary heat exchanger channel. However, the method 10 can also be used for obtaining other optimized thermal transfer objects. First, target design criteria 10a for the physical object are obtained. Then, an initial design 10b of the unit cell is defined. In this example, a reduced CFD model 10c is employed, which outputs the results to an optimizer 10d that is configured to perform shape optimization for the unit cell. This is repeated until an optimized design 10e is obtained. This is optimized design 10e at unit cell level is then used for the complete heat exchanger channel built up from an arrangement of unit cells each having the optimized shape structure(s) therein.

An adjoint-based shape optimization framework may be employed. The model equations for the flow and temperature may be discretized using for example a finite-element discretization method. For example, a continuous Gallerkin method of first and second order may be employed. To solve the discretized flow equations, a coupled and segregated approach for the (periodic) Navier-Stokes equations (e.g. Newton, Simple and Fractional Step algorithms) may be used.

The optimization framework itself may rely on the augmented Lagrangian approach for the following design problem:

$$\min_{\Omega \in \Omega_{ad}} J(\boldsymbol{q}, \Omega)$$

s.t. $\boldsymbol{R}(\boldsymbol{q},\Omega) = 0$
$\boldsymbol{h}(\boldsymbol{q},\Omega) = 0$
$\boldsymbol{g}(\boldsymbol{q},\Omega) \leq 0$
$bc(\Omega) = 0$

Here, the cost function $J$ is the negative of the heat transfer device performance. $\boldsymbol{R}$ corresponds to the CFD model for the flow and temperature (as well as the eikonal equation for the minimal thickness of the solid material), while $\boldsymbol{h}$ and $\boldsymbol{g}$ denote the equality and inequality constraints (for instance the pressure drops). The physical state vector is denoted by $\boldsymbol{q} = (\boldsymbol{u}, p, T)$, while the shape of the heat transfer unit is denoted by $\Omega$. We note that the barycenter of the shape may be fixed, i.e.

$$bc(\Omega) = \frac{1}{vol(\Omega_f)}\sum\int \boldsymbol{x} \cdot \boldsymbol{e_i} \, d\Omega_f - \bar{x} = 0$$

bc(fl) = 0 with

The former design problem can be solved by minimizing the following functional, the so-called augmented lagrangian:

$$\min_{\boldsymbol{q}, \boldsymbol{q}_{adj}, s, \Omega} L_{aug}(\boldsymbol{q}, \Omega) = J(\boldsymbol{q}, \Omega) + \langle \boldsymbol{q}_{adj}\boldsymbol{R}(\boldsymbol{q}, \Omega)\rangle_\Omega + \sum\lambda_i h_i + \sum\lambda_j(g_j + s_j) +$$

$$\sigma_h\sum h_i^2 + \sigma_g\sum\left(g_j + s_j\right)^2 + \sigma_{bc}bc^2,$$

where we recognize the multipliers $\lambda_i$, slack variables $s_j$ and penalties $\sigma$.

The adjoint state vector $\boldsymbol{q}_{adj}$ in the former augmented lagrangian $L_{aug}(\boldsymbol{q},\Omega)$ is the solution of the following adjoint model:

$$\left\langle q_{adj}, \frac{\partial}{\partial q} R(q, \Omega)\delta q\right\rangle_{\Omega} = -\left\langle \frac{\partial}{\partial q}\left(L_{aug}(q,\Omega) - \left\langle q_{adj}R(q,\Omega)\right\rangle_{\Omega}\right)\delta q\right\rangle_{\Omega}.$$

Based on the former augmented lagrangian, the shape optimization can be solved through the following nested approach:

    1) Solve model equations $R(q,\Omega) = 0$
    2) Solve adjoint equations $R_{adj}(q_{adj}, q, \Omega) = 0$
    3) Obtain gradient from $\langle \nabla L_{aug}, V \rangle_{\Omega} = dL_{aug}(\Omega)[V]$
    4) Solve bound - constrained quadratic subproblem

$$\min_{V} \frac{1}{2}V^T H_{approx}V + \nabla L^T{}_{aug}V$$

    s.t. $V_i \in [lb(x_i), ub(x_i)]$**so** $\Omega \in \Omega_{ad}$
    5) Update multipliers $\lambda_i$ *and penalties* $\sigma$.
    6) Remesh after k optimization steps
    7) Optionally loop back, after remesh of step 6, to step 1 again.

The shape derivative of the lagrangian $dL_{aug}(\Omega)[V]$ can be calculated based on the mesh node deformation field $V$. In order to transform the shape derivative into a shape gradient $\nabla L_{aug}$, use can be made of various inner products $\langle \nabla L_{aug}, V \rangle_{\Omega}$, in particular a so-called Sobolev smoothing may be applied.

First, an initial shape of the solid material in the unit cell may be chosen. The initial shape may consist for instance of three parallel plates, which form a top wall 8a, bottom wall 8b, and middle wall 7. Between the top and middle wall, as well as the bottom and middle wall, a (square) cylindrical solid fin may be present. The remaining sides of the unit cell may then serve as inlets and outlets for each of the fluids, at least if the side walls of the heat exchanger are not considered within the unit cell. In some examples, there will be a hot fluid and a cold fluid, which flow for instance in a counter-flow or cross-flow configuration. In this illustrative example, the counter-flow heat exchanger under consideration consists of two channels vertically stacked on top of each other. As such also each unit cell contains two channels: one for the hot flow and one for the cold flow. Nevertheless, the number of channels along the height of the heat exchanger can be selected differently, depending on the desired configuration of the thermal transfer device to be manufactured.

Once the design targets (performance measures) and constraints (material properties, pressure drops, ...) are specified, the design method can automatically generate an optimized unit (cell), which can be stacked to construct the entire heat transfer device.

The initial shape of the solid material (and hence the boundary of the fluid-solid interface) can be gradually optimized in a stepwise approach to maximize the performance of the heat transfer device. This optimization process is done in an automated way, by relying on a specific computational fluid dynamics (CFD) model, combined with a matching optimization method (e.g. adjoint-based).

The CFD model serves to predict the flow and temperature field for the fluid and the solid material at a reduced computational cost, so that the resulting performance (e.g. the total heat transfer rate, or wall temperature and pumping power) can be calculated.

The adjoint-based optimization method uses the information from the CFD model to modify the intermediate shape such that an incremental increase of performance is obtained at each step. In particular, the adjoint-based optimization method yields the sensitivity (or gradient) of the performance measures with respect to the shape of the solid material (in the unit cell). These shape sensitivities (also called shape derivatives or shape gradient) are subsequently provided to a gradient-based optimization algorithm to obtain a suitable modification or update of the intermediate shape.

The employed CFD model predicts the flow and temperature field in the channel under the assumption of streamwise periodicity from one unit to another. In some examples, the CFD model accounts for the laminar flow regime, although the inclusion of an additional model for the turbulent flow regime is also possible. The model may account for the overall temperature rise or decrease (the net temperature gradient) over each unit cell, as well as the local (periodic) temperature variations in the unit cell.

In some examples, the gradient-based optimization algorithm relies on a so-called augmented lagrangian approach. The integration of the CFD model, adjoint-based optimization method and the gradient-based optimization algorithm into an effective shape optimization framework, can provide for a robust and efficient design and manufacturing process.

In some examples, in order to enforce minimal thickness constraints for the optimized shape, the thickness of the solid material can be determined by solving an Eikonal equation for the material distributions of both fluids and solid.

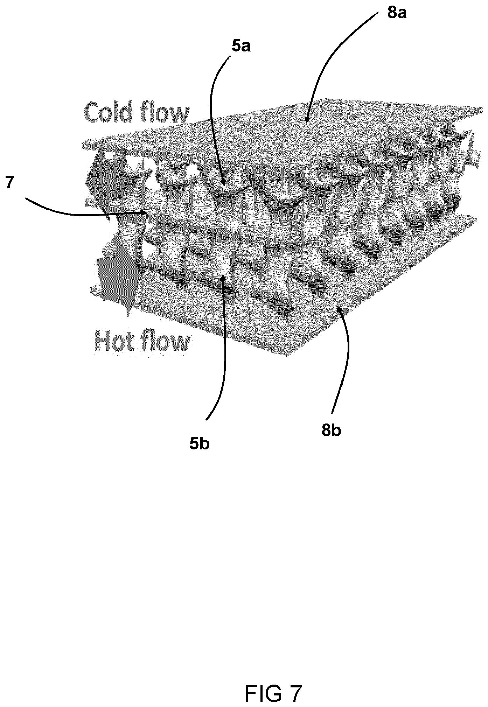

Fig. 7 shows a schematic diagram of a perspective view of an optimized part of a thermal transfer device, wherein the device is based on shape optimization on a single unit cell level. In this example, the shape of the top wall 8a and bottom wall 8b were not varied during optimization. The shape optimization was performed on the solid structures 5 and the middle wall separating the two channels 3a, 3b. However, various other approaches are possible. For example, it is possible to allow the shape of the top wall 8a and the bottom wall 8b to be varied during optimization. Alternatively, or additionally, it is possible to also keep the shape of the middle wall unchanged during optimization.

Advantageously, it is enabled to optimize the complete shape of individual heat exchanger units, which can be stacked together to construct an entire heat exchanger. As only a single unit cell is optimized, instead of the entire heat exchanger (or an entire channel), the design method is computationally very cheap and results in a fast design cycle. This makes the design method especially suitable for designing heat exchangers with a large surface area (whose performance cannot be simulated or optimized with the computationally costly state-of-the-art CFD models.

Prior art methodologies and systems are typically only suitable for optimizing the entire shape of the complete channels at once, which is computationally very expensive. Usually, supercomputer infrastructure and a vast amount of computational time is required.

It will be appreciated that the thermal transfer device may have various configurations. For example, the thermal transfer device may be a plate heat exchanger, plate-fin heat exchanger, a finned tube heat exchanger, or any other type of thermal transfer device with a repeatable pattern of solid thermal transfer structures arranged therein.

It will be appreciated that a plurality of channels may form a thermal energy exchange/transfer device like a heat exchanger or a cooling device (e.g. cold plate, heat sink).

It will be appreciated that in some examples the thermal energy transfer device may predominantly involve one-way thermal energy transfer. However, in some other examples, the device may also be adapted for bi-directional heat transfer processes.

The terms "thermal energy transfer device" and "thermal energy exchange device" used in this disclosure may be used interchangeably. This interchangeability stems from the underlying principle that both terms describe mechanisms involved in the movement of thermal energy between different mediums or locations. Whether referred to as a transfer or an exchange, the fundamental operation involves the relocation of thermal energy, which is central to both concepts. Devices typically categorized under these terms, such as heat exchangers, heat pumps, heat sinks, radiators, etc., perform functions where thermal energy is not only transferred from one entity to another but may also involve a reciprocal exchange.

It will be appreciated that the method may include computer implemented steps. All above mentioned steps can be computer implemented steps. Embodiments may comprise computer apparatus, wherein processes performed in computer apparatus. The invention also extends to computer programs, particularly computer programs on or in a carrier, adapted for putting the invention into practice. The program may be in the form of source or object code or in any other form suitable for use in the implementation of the processes according to the invention. The carrier may be any entity or device capable of carrying the program. For example, the carrier may comprise a storage medium, such as a ROM, for example a semiconductor ROM or hard disk. Further, the carrier may be a transmissible carrier such as an electrical or optical signal which may be conveyed via electrical or optical cable or by radio or other means, e.g. via the internet or cloud.

Some embodiments may be implemented, for example, using a machine or tangible computer-readable medium or article which may store an instruction or a set of instructions that, if executed by a machine, may cause the machine to perform a method and/or operations in accordance with the embodiments.

Various embodiments may be implemented using hardware elements, software elements, or a combination of both. Examples of hardware elements may include processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The term "and/or" includes any and all combinations of one or more of the associated listed items. The mere fact that certain measures are recited in mutually different claims does not indicate that a combination of these measures cannot be used to an advantage.

**Claims**

1. A computer-implemented method for optimizing geometric configurations of a thermal energy transfer device as a physical object, the thermal energy transfer device having at least a first thermal energy transfer channel and a second thermal energy transfer channel in a vertically stacked arrangement relative to one another, and wherein a wall structure is positioned between the channels to maintain separation therebetween, and wherein, within each channel, a plurality of solid structures are arranged in a periodic configuration for facilitating transfer of thermal energy from one fluid to another; wherein the method including the steps of:

   obtaining target design criteria of the physical object;
   defining, based on the target design criteria of the physical object, a unit cell which is dimensioned such that the thermal energy transfer device is formed by $N1 \times N2 \times N3$ identical unit cells, each unit cell forming a repeatable segment of at least the first thermal energy transfer channel and the second thermal energy transfer channel, with a wall portion of the wall structure arranged between said channels;
   performing, by means of a processing unit, a shape optimization of at least one or more solid structures within at least the first and second thermal energy transfer channels of the thermal energy transfer device at the unit cell level, wherein the geometric design of solid structures of a single unit cell is optimized based on a set of criteria, wherein the shape optimization involves iterative modification of the boundary surfaces of the one or more solid structures in the repeatable segment of at least the first thermal energy transfer channel and the second thermal energy transfer channel defined by the single unit cell, and wherein the shape optimization of the single unit cell is performed until a stop criterion is met, the stop criterion being defined as achieving a predetermined threshold of performance or reaching a maximum number of optimization iterations;
   outputting optimized design parameters representing at least geometric configuration of solid structures in each unit cell of the thermal energy transfer device; and
   transferring data based on the outputted optimized design parameters to production equipment to manufacture an optimized physical object representing at least a part of the thermal energy transfer device with $N1 \times N2 \times N3$ identical unit cells.

2. The computer-implemented method of claim 1, further comprising determining a predominant fluid flow direction for each of the first thermal energy transfer channel and the second thermal energy transfer channel, wherein the first thermal energy transfer channel and the second thermal energy transfer channel have respective flow directions, wherein the respective flow directions of the first and second thermal energy transfer channels may be the same or differ from each other, and wherein the optimization of the geometric configuration of the solid structures within each unit cell takes into account the flow direction within each channel.

3. The computer-implemented method of claim 1 or 2, wherein for each of the first thermal energy transfer channel and the second thermal energy transfer channel, fluid flow is modeled using periodic flow equations, said periodic flow equations ensuring homogeneity in fluid flow characteristics across the fluid channels in each unit cell constituting the thermal energy transfer channels; and wherein heat transfer within each channel of the unit cell is modeled by periodic heat transfer equations, these equations incorporating both periodically varying components and exponentially varying components to depict the temperature field dynamics within the thermal energy transfer channels.

4. The computer-implemented method of claim 3, wherein the periodic heat equations account for incremental temperature change in a thermal transfer fluid as it passes through successive unit cells along a flow path in the thermal energy transfer channels.

5. The computer-implemented method of any one of the preceding claims, wherein an initial geometric configuration of the solid structures in the unit cell includes a plurality of pillar shapes, each positioned between a pair of walls, wherein at least one wall serves as a top wall of one thermal energy transfer channel and a bottom wall of another, vertically adjacent thermal energy transfer channel within the vertically stacked arrangement.

6. The computer-implemented method of any one of the preceding claims, wherein the optimization is performed while adhering to predetermined constraints including at least a minimal material thickness of the at least one solid structure or walls.

7. The computer-implemented method of claim 6, wherein the minimal material thickness is determined by solving an Eikonal equation.

8. The computer-implemented method of any one of the preceding claims, further comprising the step of conducting remeshing operations on materials represented discretely by mesh structures within the unit cell, subsequent to one or more iterations of boundary surface modification of the at least one solid structure, wherein the remeshing operations are adapted to integrate, based on one or more remeshing criteria, discrete geometric entities within the unit cell into a unified mesh framework.

9. The computer-implemented method according to any one of the preceding claims, wherein the production equipment comprises at least one of an additive manufacturing system or an etching system, which is configured for fabricating at least parts of the thermal energy transfer channel with N1 × N2 × N3 identical unit cells based on the optimized design parameters.

10. The computer-implemented method according to any one of the preceding claims, wherein a plurality of unit cells are arranged in a matrix arrangement, each said unit cell comprising a delineated spatial configuration within which, for each of the at least first and second thermal energy transfer channels therein, is incorporated the one or more discrete solid structures surrounded by thermal fluid.

11. The computer-implemented method according to any one of the preceding claims, wherein the optimization process further comprises variations in the wall structures, including at least one of the wall structure positioned between the first and second thermal energy transfer channels or any other top or bottom walls of said channels, wherein, for sides of the unit cell that interface with adjacent unit cells within the arrangement of N1 × N2 × N3 identical unit cells, geometric wall modifications within a unit cell at one boundary are mirrored at the opposing boundary in order to maintain structural coherence and assembly compatibility across the thermal energy transfer device.

12. The computer-implemented method according to any one of the preceding claims, wherein the thermal energy transfer device comprises multiple thermal energy transfer channels configured to support multi-directional fluid flow, and wherein the geometric optimization of the solid structures within each unit cell accounts for flow directionality.

13. The computer-implemented method according to any one of the preceding claims, wherein the geometric shape optimization of solid structures of the thermal energy transfer channel at a unit cell level employs a gradient-based optimization technique that uses adjoint-based optimization for calculating gradients during the iterative process, wherein the gradient-based optimization technique is used to iteratively adjust the shape of the one or more solid structures, and wherein shape sensitivities derived from the adjoint-based optimization are used to guide shape modifications.

14. The computer-implemented method according to any one of the preceding claims, wherein the set of criteria for optimization include a performance of the device, and/or includes constraints based on operating conditions, namely at least one of a maximum pumping power, a maximum pressure drop requirement, or fixed mass flow rate.

15. A system for optimizing geometric configurations of a thermal energy transfer device as a physical object, the system comprising:

an input module configured to obtain target design criteria of the thermal energy transfer device, the device featuring at least a first thermal energy transfer channel and a second thermal energy transfer channel in a vertically stacked arrangement, each channel defined by a wall structure positioned between the channels for maintaining separation, and a plurality of solid structures arranged within each channel to facilitate thermal energy transfer;
a partitioning module, configured to define, based on the target design criteria, a unit cell dimensioned to replicate the thermal energy transfer device through a formation of N1 × N2 × N3 identical unit cells, each unit cell representing a repeatable segment of both the first and second thermal energy transfer channels, including a portion of the wall structure arranged between the channels;

an optimization module that includes a processing unit for executing a shape optimization of one or more solid structures within at least the first and second thermal energy transfer channels at the unit cell level, the optimization adjusting the geometric design of solid structures within a single unit cell based on criteria emphasizing performance, involving iterative adjustments to the boundary surfaces of the solid structures within the repeatable segment defined by the unit cell, continuing until a stop criterion of either achieving a predetermined performance threshold or reaching a maximum number of optimization iterations is met; an output module configured to output optimized design parameters that detail the geometric configuration of solid structures within each unit cell of the thermal energy transfer device;

a manufacturing module that is configured to facilitate the transfer of data, based on the optimized design parameters, to production equipment for the manufacturing of an optimized physical object representing at least a part of the thermal energy transfer device structured with $N1 \times N2 \times N3$ identical unit cells.

16. A method for constructing a thermal energy transfer device, comprising the steps of:

obtaining target design criteria of the thermal energy transfer device, the device featuring at least a first thermal energy transfer channel and a second thermal energy transfer channel in a vertically stacked arrangement, wherein a wall structure is positioned between the channels for maintaining separation, and wherein a plurality of solid structures are arranged within each channel to facilitate thermal energy transfer, wherein, based on the target design criteria of the physical object, a unit cell is defined which is dimensioned such that the thermal energy transfer channel is formed by $N1 \times N2 \times N3$ identical unit cells;
optimizing the shape of the at least one solid structure at a single unit cell level using the method of any of claims 1 to 14;
assembling the optimized unit cells into a thermal energy transfer device according to predefined design specifications of the thermal energy transfer device.

17. A thermal energy transfer device constructed employing the method according to any one of the preceding claims 1 to 14, wherein the thermal energy transfer device comprises a matrix of solid structures arrayed in at least one dimension, these structures are derived from a single unit cell model that has been subjected to one or more optimization process.

FIG 1

FIG 2

FIG 3

FIG 4

FIG 5

FIG 6

FIG 7

Europäisches
Patentamt

European
Patent Office

Office européen
des brevets

# EUROPEAN SEARCH REPORT

**Application Number**

EP 24 17 7143

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHOU YUQING ET AL: "Topology Optimization of Manifold Microchannel Heat Sinks", 2020 19TH IEEE INTERSOCIETY CONFERENCE ON THERMAL AND THERMOMECHANICAL PHENOMENA IN ELECTRONIC SYSTEMS (ITHERM), IEEE, 21 July 2020 (2020-07-21), pages 740-746, XP033825279, DOI: 10.1109/ITHERM45881.2020.9190257 [retrieved on 2020-09-09] * abstract * * figures 1, 3-8 * * Section II, III, IV * | 1-17 | INV. G06F30/23 G06F30/28 F28F7/02 ADD. G06F119/08 G06F119/18 |
| A | DEDE ERCAN M ET AL: "Experimental and numerical investigation of a multi-pass branching microchannel heat sink", APPLIED THERMAL ENGINEERING, PERGAMON, OXFORD, GB, vol. 55, no. 1, 14 March 2013 (2013-03-14), pages 51-60, XP028531703, ISSN: 1359-4311, DOI: 10.1016/J.APPLTHERMALENG.2013.02.038 * abstract * * figures 1-8 * * Sections 2-4 * | 1-17 | TECHNICAL FIELDS SEARCHED (IPC) G06F F28F |

The present search report has been drawn up for all claims

| Place of search | Date of completion of the search | Examiner |
|---|---|---|
| Munich | 5 November 2024 | Winkelbauer, Andreas |

EPO FORM 1503 03.82 (P04C01)